# EUROPEAN PATENT SPECIFICATION

(11) **EP 1 715 441 B1**
(45) Date of publication and mention of the grant of the patent: **05.06.2013**
(21) Application number: 05102902.3
(22) Date of filing: 13.04.2005
(51) Int. Cl.: G06K 9/03, G06K 9/62

(54) **An image-recognition method for use in a book-binding machine**
Bilderkennungsmethode für Verwendung in einer Buchbindereimaschine
Méthode de reconnaissance d'images pour utilisation dans une machine de reliure de livres

(30) Priority: 14.04.2004 EP 04101528; 14.04.2004 EP 04101529
(43) Date of publication of application: 25.10.2006
(73) Proprietor: MECCANOTECNICA S.p.A., I-24025 Gazzaniga - Bergamo (IT)
(72) Inventor: CAPELLI, Silvano, I-24061, ALBANO SANT'ALESSANDRO (BG) (IT); CORDELLA, Alfredo, I-24125, BERGAMO (BG) (IT)
(74) Representative: Pezzoli, Ennio

(56) References cited:
- EP-A- 0 639 522
- EP-A- 1 024 442
- US-A- 4 953 841
- US-A- 5 120 126
- US-B1- 6 181 818

## Description

The present invention relates to the bookbinding field, and more specifically to an image-recognition method for use in a bookbinding machine.

The identification of different items (and especially signatures) plays an important role in the automation of bookbinding machines. A typical example is that of a sewing machine, which is used to sewn together stacks of signatures for the production of corresponding books. In this case, it is of the utmost importance to identify the signature under processing, so as to promptly detect any sequencing error.

A solution known in the art for identifying the signatures is that of using specific marks or bar codes. Although very accurate, this approach cannot be exploited in most practical situations; moreover, the method requires signatures with predefined characteristics so that it is not of general applicability.

The use of image-recognition techniques has also been proposed in the last years. However, the sophisticated algorithms that are available in several fields cannot be applied to the bookbinding machines. Indeed, the image-recognition methods known in the art are based on the analysis of a finite set of predefined elements (such as mechanicals parts with known characteristics); conversely, the images printed on the signatures to be recognized are indeterminate and infinite. Moreover, another problem is caused by the high operative speed of the bookbinding machines; this requires that the image-recognition algorithm should be computationally simple (so as to allow its implementation at reasonable costs); the problem is particular acute in bookbinding machines requiring multiple image-recognition devices (for example, one per hopper in a gathering machine). An additional constraint ensues from the small space that is available in the bookbinding machines and from their harsh operative conditions (for example, high vibrations); this makes it very difficult (if not impossible) to use complex devices, such as with Personal Computer architecture.

Therefore, all the image-recognitions devices that can be embedded in the bookbinding machines are based on simple technical solutions; particularly, the analysis is always restricted to a very small area of the images.

This significantly reduces the accuracy of the algorithm (since different signatures can include the same particular in the analysis area).

Moreover, the results are strongly dependent on the skill of an operator, which has to select the analysis area manually.

In any case, this approach cannot be applied in bookbinding machines where the signatures are already gathered in the desired order, since their periodic change prevents the definition of a single analysis area for all the signatures.

A further drawback of the solutions known in the art is that they require several learning cycles to provide an acceptable level of accuracy; therefore, the bookbinding machine must work for a relatively long period without any sequencing error check.

For example, EP-A-0639522 discloses storing a brightness pattern of a document; at least a part of another document is scanned and compared with the stored pattern to verify whether a specified mimimum extent of agreement is found.

US-A-495384 instead discloses storing Juring limited areas of interest with their position from selected signatures; for each captured image, the stored area of interest of each selected signature is searched at the corresponding position.

Moreover. US-A-61818 diecloses a technique for searching images in a database based on histograms.

US-A-5120126 discloses a technique for inspecting labels of beverage cans.

EP-A-1024442 discloses a technique for searching images in a database based on color label strings

It is an object of the present invention to provide an image-recognition method for use in a bookbinding machine, which method is accurate but at the same time requires low computational power and is simple to implement.

It is another object of the present invention to provide a method that is substantially automatic and of general applicability.

It is yet another object of the present invention to reduce the leaming cycles, so as to enable the sequencing error check as soon as possible.

The accomplishment of these and other related objects is achieved by the solution set out in the independent claims.

Briefly, an aspect of the present invention provides an image-recognition method for identifying items in a book-binding machine, as defined by the steps of claim 1

The invention also provides a computer program for performing the method, and a product embodying the program.

A corresponding image-recognition device and a bookbinding machine including this device are also encompassed.

Further features and the advantages of the solution according to the present invention will be made clear by the following description of a preferred embodiment thereof, given purely by way of a non-restrictive indication, with reference to the attached figures, in which:
Figure 1 is a pictorial representation of a sewing machine in which the method of the invention is applicable;
Figure 2 depicts the selection of an area of the signatures for their recognition;
Figure 3 shows the functional blocks of an image-recognition device wherein the method of the invention can be practiced;
Figure 4 shows the main software components that can be used for implementing the method;
Figures 5a-5c show a flow chart describing the logic of the method according to an embodiment of the invention; and
Figures 6a-6d detail specific steps of the method.

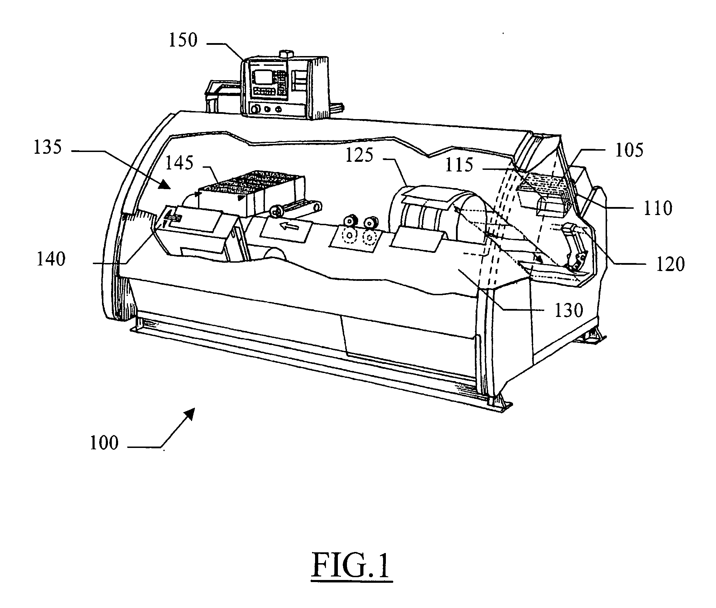

With reference in particular to Figure 1, a bookbinding sewing machine 100 is shown. The machine 100 is used to sew together signatures 105, in order to produce corresponding books. Each book is formed by a predefined number of signatures (such as 5-20), which are ordered in a desired sequence. Each signature 105 consists of a large printed sheet being folded one or more times, so as to form several layers (each one for a page of the book). The signature 105 is identified by a corresponding image (for example, a text with or without drawings), which is printed on its front layer.

The signatures 105 are loaded into a hopper 110, with their front layers facing forwards. As described in detail in the following, an image-recognition device 115 is used to identify the signature 105 at the bottom of the hopper 110. Pliers 120 extract the signatures 105 from the bottom of the hopper 110 and feed them in succession to an opening station 125. Each signature 105 is opened in the middle and placed astride a fixed saddle 130, which conveys the signature 105 to a sewing station 135. Particularly, the signature 105 is loaded onto a movable saddle 140 and then sewn to a previous signature of a current sequence by means of continuous threads. The resulting stack of signatures 145 is then supplied to further machines (not shown in the figure) for completing the production of the book. Operation of the bookbinding machine 100 is managed by means of a programmable logic controller (PLC) 150.

Similar considerations apply if the sewing machine has a different structure or includes other units.

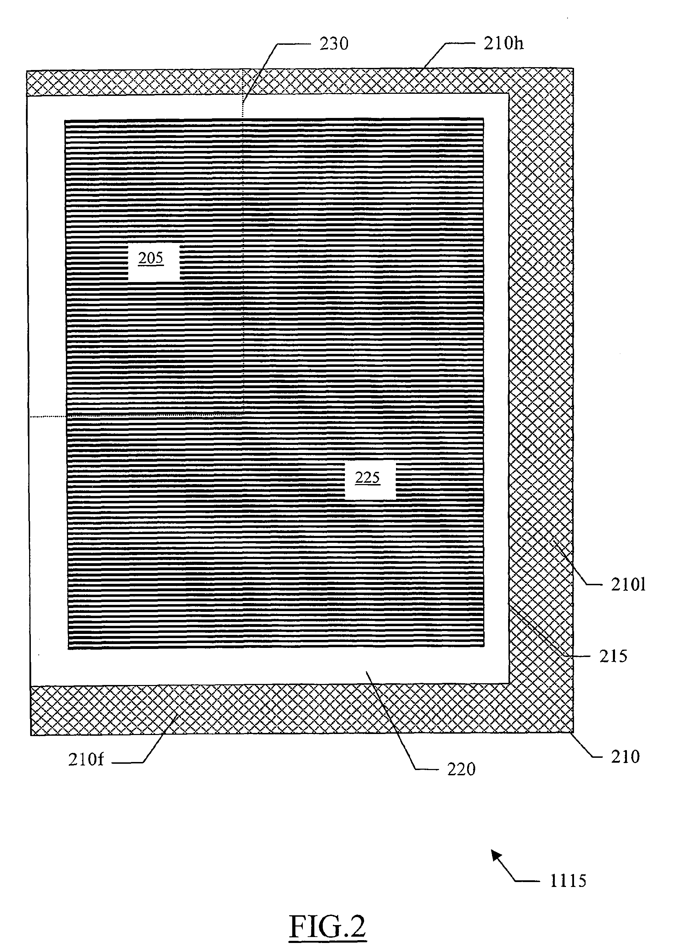

As shown in Figure 2, the identification of each signature 105 is based on a Region Of Interest (ROI) 205 on its front layer. The selection of the region of interest 205 results from an analysis of the recurring characteristics of all the signatures 105.

First of all, the signature 105 includes a scrap area 210 that is cut by a three-knife trimmer after the sewing (so as to allow opening all the pages of the book). Particularly, the scrap area 210 includes a lateral edge 2101 extending from a lip of the signature 105 (opposed to its last fold defining a back); the scrap area 210 further includes an upper edge 210h extending from a head of the signature 105 (connecting the back to the lip at the top, where the reading starts), and a lower edge 210f extending from a foot of the signature 105 (opposed to the head). Typically, the upper edge 210h has a width of 3-4mmm, while the lateral edge 2101 and the lower edge 210f are wider (for example, 5-7mmm); moreover, the last fold of the signature 105 can be asymmetric (to define a lap that facilitates the opening of the signature 105), thereby increasing the width of the lateral edge 2101 (for example, by 7-12mmm).

The remaining portion of the front layer of the signature 105 defines a printable area 215. In turn, the printable area 215 includes a margin area 220 that is left blank; typically, the margin area consists of a frame wider than 5mm. A desired page 225 is then printed in the remaining portion of the printable area 215 surrounded by the margin area 220.

The selection of the region of interest 205 is further based on the consideration that the content of the printed page 225 commonly starts from the top and the left. Another aspect to be taken into account is that the signature 105 has a minimum allowable size (for example, 150mm high and 75mm wide). A reduction area 230 is defined accordingly; the reduction area 230 extends from an upper-left corner of the signature 105 and has the minimum allowable size. The region of interest 205 is then obtained by intersecting the printed page 225 with the reduction area 230.

In this way, in most practical situations the image in the region of interest 205 includes a significant portion of the signature 105; therefore, the region of interest 205 strongly characterizes the signature 105 (this is true even when the region of interest 205 is completely blank).

Similar considerations apply the signature has another format, or if the scrap area, margin area and/or minim size of the signature are different.

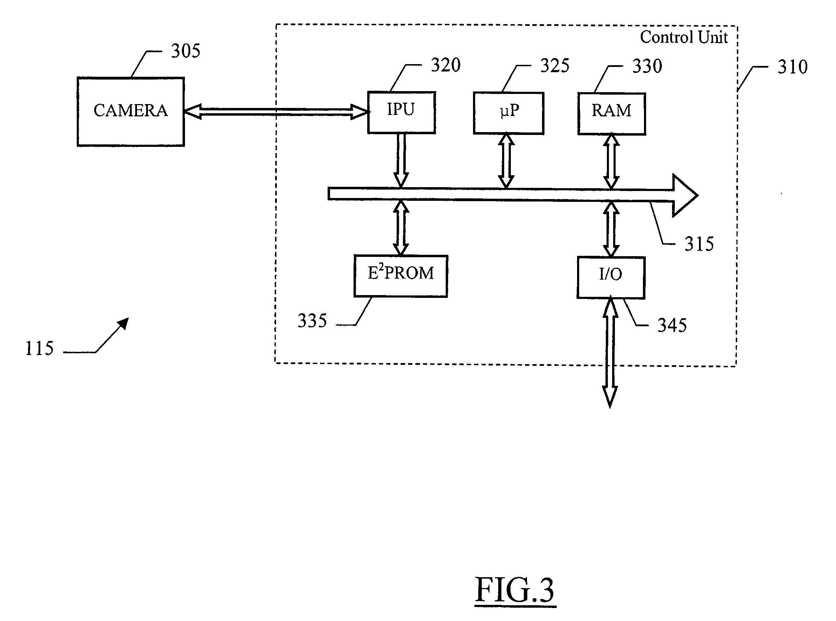

Moving now to Figure 3, the image-recognition device 115 includes a camera 305 (typically formed by a set of lenses and a CCD or CMOS sensor). The camera 305 acquires a digital representation of a generic image. Such a representation (referred to as digital image in the following) consists of a bit map that is formed by a matrix of elements (for example, with 126 rows and 574 columns). Each element of the matrix represents a basic area of the image (or pixel); typically, the element consists of three values (for example, each one of 8 bits) indicative of the Red, Green and Blue (RGB) components of the pixel.

The digital image is supplied to a control unit 310, which is formed by several blocks connected in parallel to a communication bus 315. Particularly, an image-processing unit (IPU) 320 receives the digital image from the camera 305. The image-processing unit 320 determines various parameters of the digital image (such as a high-frequency content and an average luminosity), which are used to automatically control operation of the camera 305 (for example, the focus and exposure). The image-processing unit 320 also modifies the digital image to improve its quality (for example, applying a white-balance algorithm, correcting exposure problems, reducing a noise introduced by the sensor, and the like).

A microprocessor 325 implements an algorithm for recognizing the (updated) digital image that is output by the unit 320. A RAM 330 is used as a working memory by the microprocessor 325, while a non-volatile memory 335 (for example, consisting of a bank of E²PROMs) preserves information to be used throughout the image-recognition process and stores a control program for the microprocessor. An Input/Output (I/O) interface 345 couples the control unit 310 with the PLC of the sewing machine.

Similar considerations apply if the image-recognition device has a different structure or includes equivalent units (for example, multiple cameras); alternatively, the IPU performs other operations, or the digital images are not manipulated before the image-recognition process.

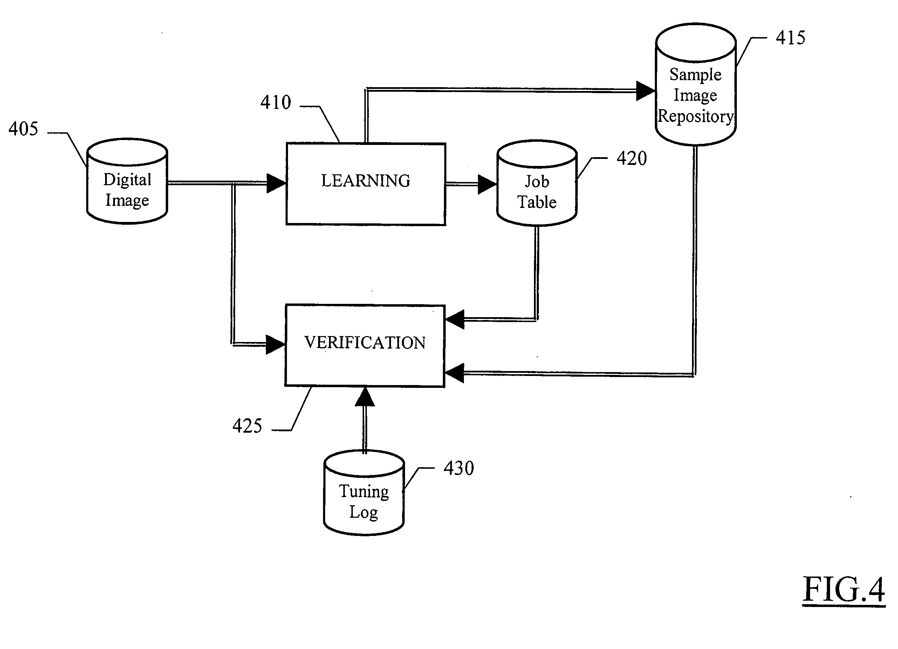

The main software components that can be used for implementing the method of the invention are shown in Figure 4. Particularly, each digital image (being acquired by the camera and possibly updated by the image-processing unit) is denoted with 405. At the beginning of each new job to be executed on the sewing machine, the digital images 405 that will be used as samples during the image-recognition process (referred to as sample images in the following) are supplied in succession to a learning module 410; the sample images are provided in succession according to the corresponding sequence of the signatures. For each sample image, the learning module 410 calculates information to be used during the image-recognition process; this information is stored into a sample image repository 415. Moreover, the learning module 410 controls a job table 420; the table 420 stores information about the current job, such as a pointer to the information relating to each sample image in the corresponding repository 415, the number of signatures included in each book, and a counter indicating the expected sample image (corresponding to a next signature in the sequence or to the first one after completion of a book).

When the job is actually executed, each current digital image (or simply current image) is supplied to a module 425 that verifies a match of the current image with the expected one; for this purpose, the verification module 425 accesses the sample image repository 415 and the job table 420. Information that can be used to tune operation of the verification module 425 is stored into a corresponding log 430.

Similar considerations apply if the program and the corresponding data are structured in another way.

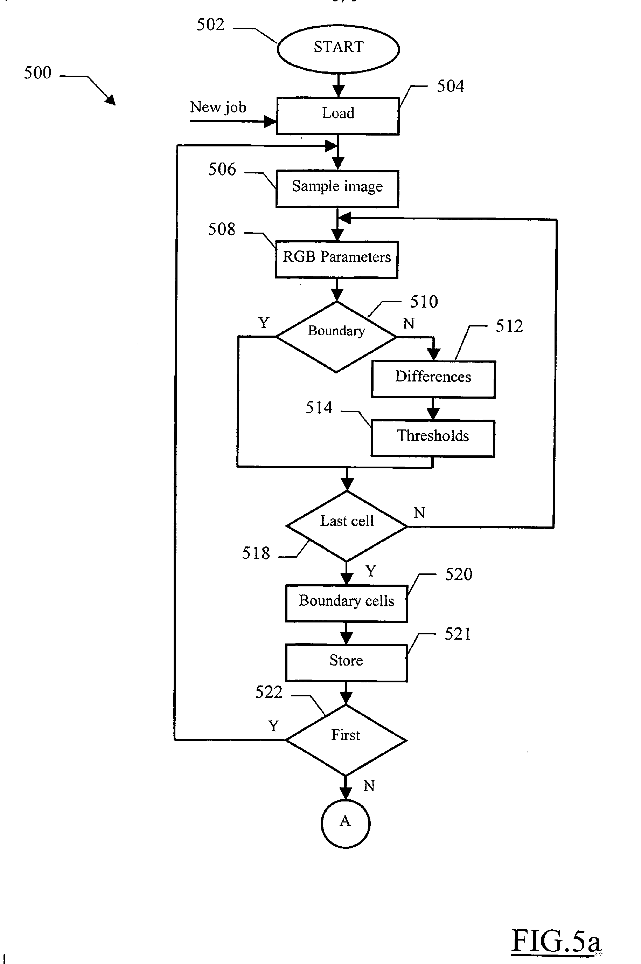

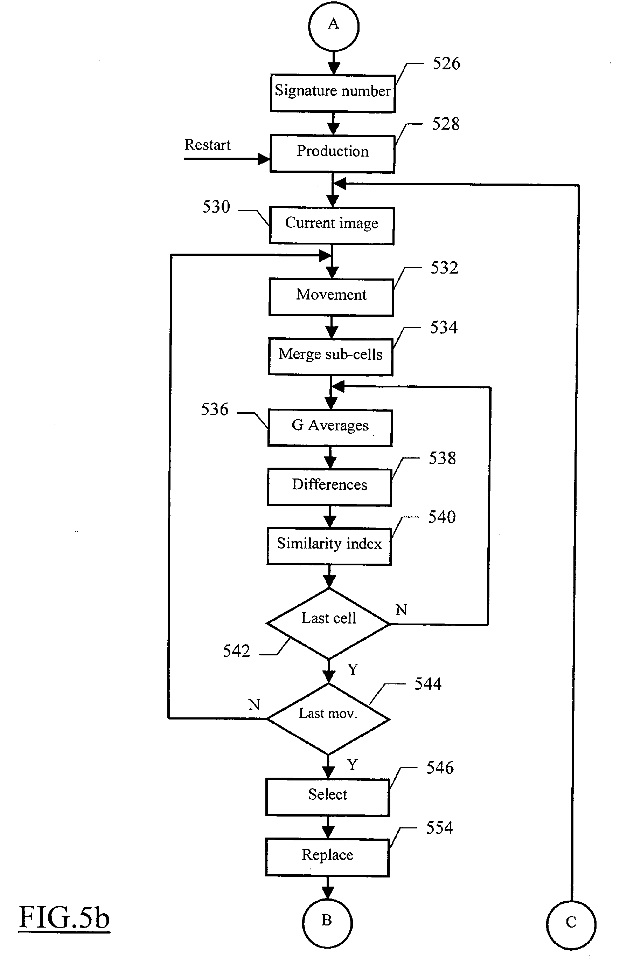

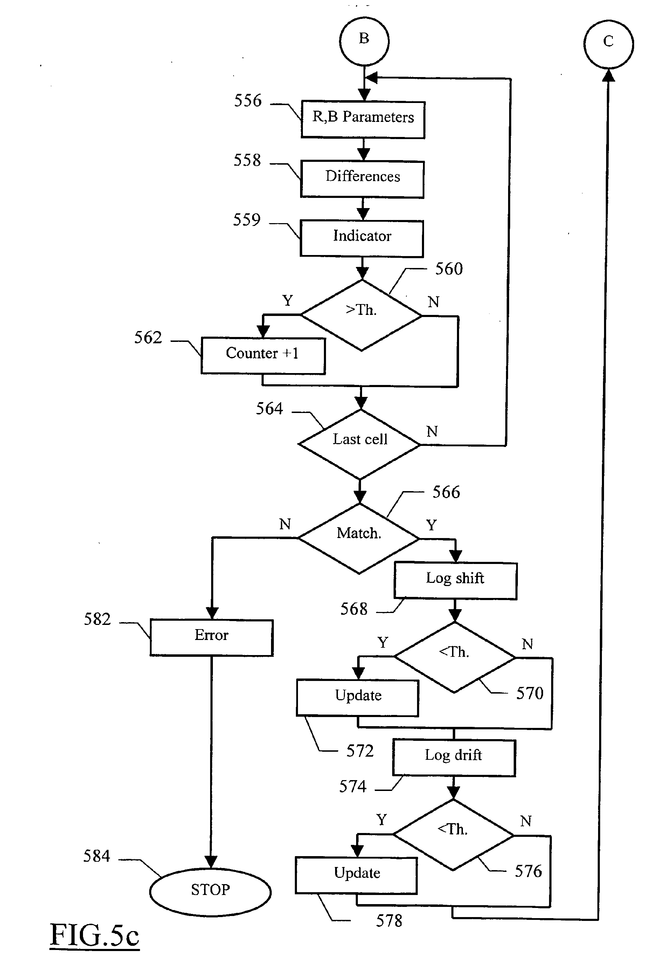

Moving now to Figure 5, the image-recognition process implements a method 500. The method begins at the start block 502, and then passes to block 504 (when the sewing machine is turned on); the same point is also reached whenever a new job is submitted. The signatures are loaded into the hopper and are manually checked by an operator (to ensure the correct order of the signatures defining the first stacks); the sewing machine then starts working.

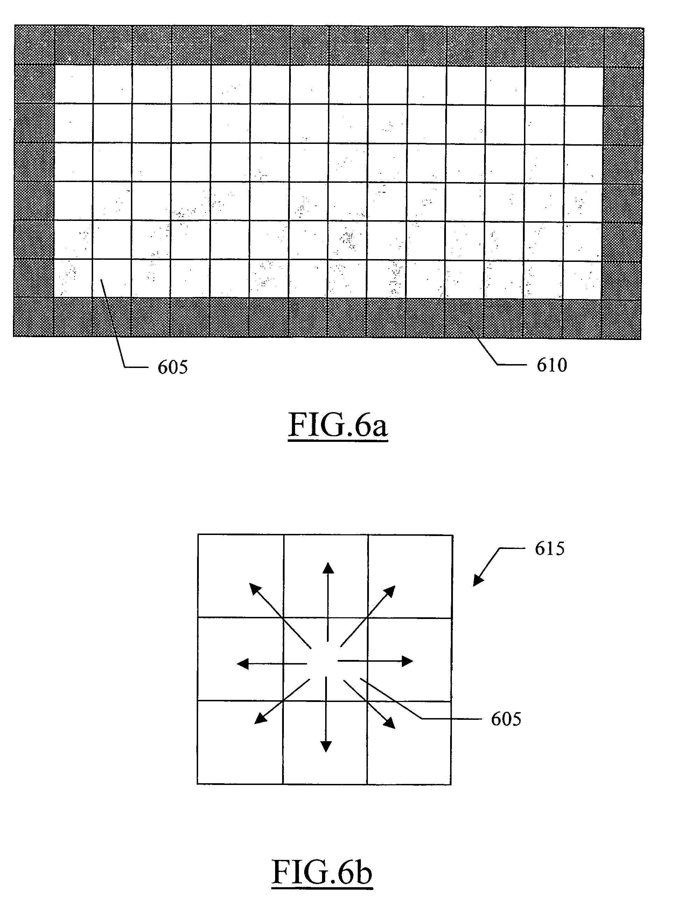

A learning phase begins at block 506; for each signature of the first stack, the corresponding sample image is acquired. The sample image is partitioned into a plurality of sub-matrixes, or cells (for example, each one including 6 rows and 14 columns of RGB components, so as to have 126/6=21 rows and 574/14=41 columns of cells in the sample image). Proceeding to block 508, a comparison parameter is calculated for each cell with respect to the red components, the green components and the blue components, respectively; as shown in Figure 6a, each comparison parameter is based on the average of the corresponding RGB components in a portion of the sample image including the pixels of the cell (denoted with 605) and a surrounding frame 610 (with a width of one or more pixels). In this way, the differences between neighbor cells are filtered (so as to tolerate small displacements of the images).

As a result, the sample image can be represented with a reference pattern, which consists of the above-mentioned red, green and blue comparison parameters for each cell. The reference pattern synthesizes the representation of the sample image, thereby allowing analysing a relatively large image without requiring a too high computational power.

Referring back to Figure 5a, a loop is now performed for each cell of the sample image (starting from the fist one); the loop begins at decision block 510, wherein a test is made to determine whether the cell is arranged along a boundary of the sample image (i.e., in the first or in the last rows/columns). If not, the method descends into block 512; as shown in Figure 6b, for each comparison parameter (red, green and blue) of the cell 605 a difference with the corresponding comparison parameters of any adjacent cell 615 is calculated.

Returning to Figure 5a, a positive threshold is determined for the red, green and blue comparison parameters, respectively, at block 514; each positive threshold is set to the highest one of the differences between the corresponding comparison parameters; likewise, for each comparison parameter a negative threshold is set to the lowest one of the respective differences. Those thresholds are used to parameterise the results of the comparisons with the sample image according to its actual content; as a consequence, the accuracy of the comparisons is maintained at an acceptable level, despite the reduced resolution of the reference pattern. Moreover, it should be noted that the resulting method is completely independent of the content of the images, so as to provide a very high robustness. As a consequence, the learning cycles (required to have an acceptable level of accuracy) can be strongly reduced, down to a single one.

The method then descends into decision block 518; the same point is also reached from block 510 directly when the cell is arranged along the boundary of the sample image; a test is now made to determine whether the last cell of the sample image has been processed. If not, the flow of activity returns to block 508 to repeat the same operations described above on a next cell. Conversely, the method passes to block 520, wherein the positive threshold and the negative threshold for all the boundary cells are set to the worst values (i.e., the maximum one and the minimum one, respectively) among the corresponding thresholds associated with the non-boundary cells. In this way, the effects of the sharp contrasts at the edges of the images (with respect to non-visible parts) are attenuated.

Considering now block 521, the reference pattern of the sample image and the associated positive/negative thresholds are stored into the corresponding repository. If the sample image is the first one in the sequence (decision block 522), the method returns to block 506 to process a next sample image.

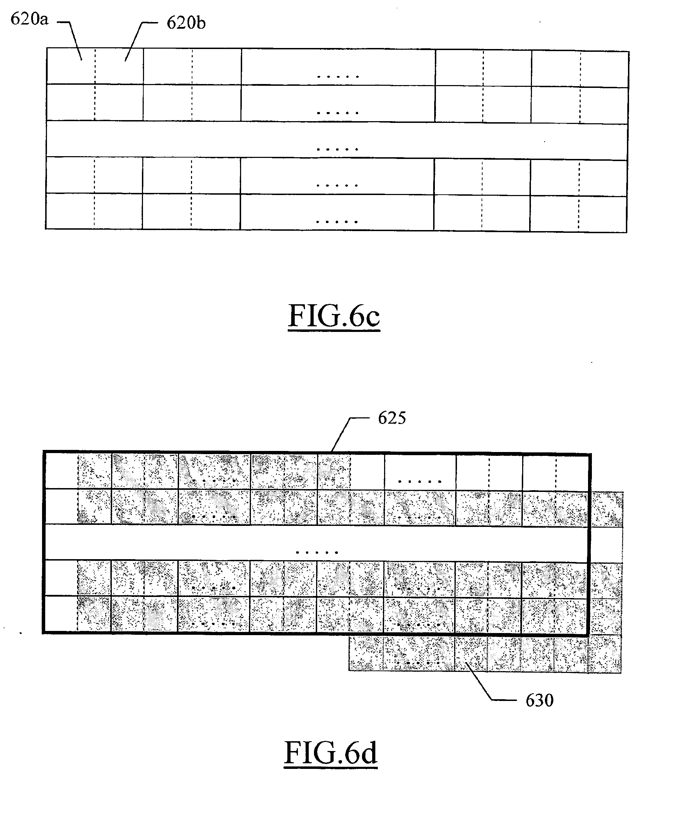

On the contrary, the actual execution of the job can now start at block 528; the same point is also reached whenever the job is re-started (for example, after correcting an error). A verification phase begins at block 530. Particularly, the device receives the number of the expected sample image. The current image of the signature to be identified is then acquired. The current image is partitioned into a plurality of sub-cells; for example, as shown in Figure 6c, each sub-cell (denoted with 620a and 620b, respectively) corresponds to half a cell of the sample images (with 3 rows and 7 columns of RGB elements, so as to have 21 rows and 41 *2=82 columns of sub-cells in the current image).

Returning to Figure 5b, a panning operation is then performed, in order to correct a movement of the signature (with respect to its correct position defined by the expected image). For this purpose, a loop is executed for each eligible image that can be derived from the current image. The loop starts at block 532, wherein a specific eligible image is generated. The eligible images represent any movement (translation and/or rotation) within an allowable range corresponding to a positioning tolerance of the sewing machine (for example, +/-5mm and +/-3°); the movements are selected with a resolution defined by the sub-cells. More specifically, the translations are generated shifting the current image leftwards, rightwards, upwards and/or downwards of one or more sub-cells; on the other hand, the rotations are generated splitting the current image into two or more vertical strips, and then shifting (upwards or downwards) all the sub-cells of the second strip by one position, all the sub-cells of the third strip by two positions, and so on. The sub-cells that move outside the matrix are discarded, while the sub-cells that are left empty are invalidated (such as with a null value). For example, Figure 6d shows an eligible image 625 corresponding to the minimum allowable translation to the right and to the minimum allowable rotation clockwise of the current image (denoted with 630).

Returning to Figure 5b, each pair of adjacent sub-cells (in the same row) is merged into a cell at block 534, so to obtain a structure corresponding to the one of the sample images (every cell is set to the null value whenever one or both of its sub-cells are invalid).

A loop is now performed for each valid cell of the eligible image (starting from the first one); the loop begins at block 536, wherein a green comparison parameter is calculated (repeating the operations described at blocks 510-520 only for the green components). Continuing to block 538, a difference is determined between the green comparison parameter of the eligible image and the corresponding green comparison parameter of the expected image. The resulting value is accumulated at block 540 into an error index (indicative of the difference between the two digital images). A test in then made at block 542 to determine whether the last valid cell of the eligible image has been processed. If not, the method returns to block 536 to repeat the same operations described above on a next valid cell. On the contrary, the method verifies at block 544 whether all the eligible images have been considered. If the result of the verification is negative, the method returns to block 532 (to continue the panning operation). It should be noted that the above-described comparison (which must be repeated for each eligible image) is performed only for the green components (so as to limit the computational complexity of the algorithm); in any case, the corresponding loss in precision is negligible in this preliminary phase and does not adversely affect the accuracy of the method.

Once all the eligible images have been processed, the flow of activity descends into block 546, wherein the eligible image having the lowest error index is selected.

Considering now block 554, the current image is replaced with the selected eligible image.

A further loop is now performed for each valid cell of the (new) current image (starting from the first one); the loop begins at block 556, wherein a red comparison parameter and a blue comparison parameter are likewise calculated (so as to complete a reference pattern of the current image). Continuing to block 558, a difference is determined between each comparison parameter of the current image and the corresponding comparison parameter of the expected image. With reference now to block 559, a drifting indicator for each RGB component (consisting of the average of the differences between the corresponding comparison parameters) is updated accordingly. The method then verifies at block 560 whether all the resulting values fall within the range defined by the respective negative thresholds and positive thresholds (i.e., whether each difference is higher than the negative threshold and lower than the positive threshold). If the result of the verification is negative for one or more of the differences, an error counter (being reset at the beginning of the verification phase) is incremented at block 562; the method then continues to block 564. Conversely, the method descends into block 564 directly. A test is then made at block 564 to determine whether the last valid cell of the current image has been processed. If not, the method returns to block 556 to repeat the same operations described above on a next valid cell.

Once all the valid cells of the current image have been checked, the method enters decision block 566. If the error counter is below an acceptable value, the current image is deemed to match the expected one; the acceptable value of the error counter (for example, 0-5) is selected so as to filter small flaws in the signature (such as ink spots), thereby avoiding most spurious errors.

In this case, the values of the translation and/or rotation associated with the selected eligible image are stored at block 568 into the tuning log; this information is used to update corresponding tolerance indexes (for example, consisting of the running averages of those values), which are associated with the expected image. A test is made at block 570 to determine whether the tolerance indexes reach a corresponding threshold (indicating that the signatures associated with the expected image are systematically displaced). If so, the allowable range of the translation and/or rotation for the sample image is increased accordingly at block 572 (for example, of a percentage depending on the corresponding tolerance indexes); the method then passes to block 574. The same point is also reached from block 570 directly when the tolerance indexes are below their threshold.

Considering now block 574, the red, green and blue drifting indicators for the current image are likewise stored into the tuning log; this information is used to update corresponding drifting indexes (for example, consisting of the running averages of those values), which are associated with the expected image. A test is made at block 576 to determine whether the drifting indexes reach a corresponding threshold (indicating that the colour characteristics of the signatures associated with the expected image are changing). If so, the corresponding thresholds for the sample image are increased accordingly at block 578 (for example, of a percentage depending on the corresponding drifting indexes); the method then returns to block 530 to repeat the operations described above for a next signature (until the sewing machine is stopped). The same point is also reached from block 576 directly when all the drifting indexes are below their threshold.

In this way, the algorithm self-adapts to the different tolerances of the bookbinding machine and to any drift in the characteristics of the signatures.

Referring back to 566, if the current image does not match the expected one (i.e., the error counter exceeds the acceptable value) an error condition is entered at block 582; particularly, the sewing machine is stopped and a corresponding message is displayed. The method then ends at the final block 584.

Similar considerations apply if the program performs equivalent steps, if routines are provided for managing any exceptions, and the like.

In any case, the concepts of the present invention are also applicable to a gathering machine, or more generally in any other bookbinding machine. Alternatively, the images are represented with equivalent elements, or each matrix is partitioned into different blocks; moreover, a different number of parameters and/or thresholds can be associated with each cell (for example, combining the different RGB components into a single comparison parameter), or the match between the images can be verified according to an equivalent criterion based on the thresholds.

More generally, an aspect of the present invention proposes an image-recognition method for identifying items in a bookbinding machine. The method starts with the step of acquiring a digital representation of one or more sample images to be learned; the representation is composed of a plurality of elements that are grouped into blocks. One or more parameters are calculated for each block of the sample image; the parameters are based on a portion of the representation corresponding to the block. Then, one or more threshold values are determined for each block of the sample image, according to a comparison between the parameters of the block and the parameters of adjacent blocks. The method continues with the step of acquiring the digital representation of a current image to be verified. The parameters for each block of the current image are then calculated. The method ends with the step of verifying a match of the current image with an expected sample image; the verification is performed according to a criterion, which is based on a comparison between the parameters of the current image and the parameters of the expected sample image depending on the corresponding threshold values.

The preferred embodiment of the invention described above offers further advantages.

Particularly, the comparison parameters are calculated as an average of the corresponding RGB components.

As a further enhancement, the averages are based on a portion of the sample image surrounding the cell.

A suggested choice for determining the thresholds is that of selecting one or more peak values of the differences between the corresponding comparison parameters of adjacent cells.

A way to further improve the solution is of setting the thresholds for the boundary cells to the worst value of the corresponding thresholds for the other cells.

Similar considerations apply if each pixel is represented by one or more equivalent color components, or if the averages are calculated with different weights for the color components of the pixels inside and outside the cell. Alternatively, the comparison parameters are obtained summing the corresponding RGB components, or the thresholds are determined taking into account other adjacent cells (for example, only moving horizontally and vertically or by two or more cells); moreover, the threshold for each color component can be set to the highest absolute value of the differences between the corresponding comparison parameters, or the boundary cells can consist of cells in two or more rows/columns.

In any case, the representation of the images with different structures or techniques (for example, in the luminance/chrominance space) is not excluded. Moreover, the solution according to the present invention lends itself to be implemented calculating the comparison parameters only according to the content of the corresponding cells. Alternatively, the thresholds are calculated in a different way (for example, according to an average of the corresponding differences), or applying the same algorithm for the boundary cells as for the other cells.

In a preferred embodiment of the invention, the match is not detected when the error counter reaches a corresponding acceptable value.

As a further improvement, the thresholds are updated dynamically.

However, the concepts of the present invention are also applicable when the match between the two images is determined in another way (for example, accumulating the differences being calculated for each cell), or when the thresholds are updated with more sophisticated algorithms (for example, based on fuzzy logic techniques). In any case, the use of thresholds that cannot be updated dynamically is not excluded.

Advantageously, any movement of the current image is corrected selecting the eligible image that best fits the expected one (according to a preliminary comparison based on a sub-set of the corresponding parameters).

A suggested choice for performing the above-mentioned step is that of using the green comparison parameters only.

As a further enhancement, the allowable range of the movement is updated dynamically.

Similar considerations apply if the eligible images are generated in a different way (for example, with another resolution of the movements, either finer or based on a whole cell), or if the preliminary comparison is based on one or more different color components. In any case, the method of the present invention lends itself to be implemented even without any correction of the movements, or without updating the allowable range dynamically.

Preferably, an optimal region of interest is predefined for all the signatures.

Alternatively, the region of interest is selected according to different criteria, or the algorithm is applied to the whole signature; in any case, the use of the proposed method for different applications in the bookbinding field (for example, to identify a book) is not excluded.

Advantageously, the solution according to the present invention is implemented with a computer program, which is provided as a corresponding product embodied in a suitable medium.

Similar considerations apply if the program is executed under the control of an equivalent data processing system, or if the program is provided on a different computer readable medium (such as a flash card). However, the method according to the present invention lends itself to be carried out even with a hardware structure (for example, integrated in a chip of semiconductor material), or with a combination of software and hardware.

Naturally, in order to satisfy local and specific requirements, a person skilled in the art may apply to the solution described above many modifications and alterations all of which, however, are included within the scope of protection of the invention as defined by the following claims.

## Claims

1. An image-recognition method (500) for identifying items in a bookbinding machine, the method including the steps of:
acquiring (506) a digital representation of at least one sample image to be learned, the representation of each sample image being composed of a plurality of elements grouped into blocks,
calculating (508) at least one corresponding parameter for each block of each sample image, said at least one parameter being based on a portion of the representation of the sample image corresponding to the block,
calculating (512-520) at least one corresponding threshold value for each parameter of each block of each sample image according to a comparison between the parameter of the block and the parameters of adjacent blocks,
acquiring (530-554) the digital representation of a current image to be verified,
calculating (556) said at least one corresponding parameter for each block of the current image, and
verifying (558-566) a match of the current image with an expected one of said at least one sample image according to a criterion based on a result of a comparison between each parameter of each block of the current image and the corresponding parameter of the corresponding block of the expected sample image, the result of the comparison depending on the corresponding at least one threshold value.

2. The method (500) according to claim 1, wherein each element is indicative of at least one color component of a corresponding pixel of the image, for each color the step of calculating (508;556) said at least one corresponding parameter for each block including:
calculating an average of the color components of the corresponding portion.

3. The method (500) according to claim 1 or 2, wherein for each block the corresponding portion of the digital representation consists of the elements of the block and of the elements defining a frame surrounding the block.

4. The method (500) according to any claim from 1 to 3, wherein the step of determining (512-520) at least one corresponding threshold value for each block includes, for each parameter of the block:
calculating (512) a difference between the parameter of the block and the corresponding parameter of each adjacent block,
selecting (514) at least one peak value of the differences.

5. The method (500) according to claim 4, wherein the representation of the sample image includes a plurality of boundary blocks surrounding a plurality of non-boundary blocks, the step of determining (512-520) at least one corresponding threshold value for each block further including:
setting (520) each threshold value for each boundary block to the worst one of the corresponding threshold values for all the non-boundary blocks.

6. The method (500) according to any claim from 1 to 5, wherein the step of verifying (558-566) a match includes:
calculating (558) a further difference between each parameter of the current image and the corresponding parameter of the expected sample image,
incrementing (560-562) an error counter when at least one further difference for each block of the current image reaches the corresponding at least one threshold value of the expected sample image, and
detecting (566) the match when the error counter is below an acceptable value.

7. The method (500) according to any claim from 1 to 6, further including the steps in response to a positive verification of the match of:
storing (568) drifting information indicative of the further differences, and
updating (570-572) the threshold values of the expected sample image according to the drifting information.

8. The method (500) according to claim 1 or 7, wherein the step of acquiring (530-554) the digital representation of a current image includes:
generating (532-534) a plurality of eligible digital representations each one indicative of a corresponding movement of the current image within an allowable range,
determining (536-540) an error index for each eligible representation, the error index being based on a still further difference between a subset of the parameters of the eligible image and a corresponding subset of the parameters of the expected sample image,
selecting (546) a minimum one of the error indexes, and
replacing (554) the representation of the current image with the eligible representation corresponding to the selected error index.

9. The method (500) according to claim 8, wherein said at least one color component of each pixel consists of a red component, a green component and a blue component, each subset of the parameters consisting of the corresponding parameters based on the green components.

10. The method (500) according to claim 8 or 9, further including the steps of:
storing (570) tolerance information indicative of the movements corresponding to the eligible representation associated with the selected error index, and
updating (572-574) the allowable range according to the tolerance information.

11. The method (500) according to any claim from 1 to 10, wherein the items consist of signatures (105) having a minimum allowable size, and wherein each signature includes a scrap area (210) surrounding a printable area (215) and the printable area includes a margin area (220) surrounding a printed page (225), each image (205) consisting of an intersection of the printed page with a reduction area (230) extending from a starting read corner of the signature and having the minimum size.

12. A computer program (410,425) directly loadable into a working memory (330) of a data processing system (150), the program being configured to perform the method of any claim from 1 to 11 when the program is run on the system.

13. A program product (335) including a computer readable medium embodying the computer program (410,425) of claim 12.

14. An image-recognition device (115) for identifying items in a book-binding machine including means (305,410,425) configured for causing the image-recognition device to carry out the steps of the method according to any claim from 1 to 11.

15. A book-binding machine (100) including means (110) for providing items (105) to be identified in succession, and the image-recognition device (115) of claim 14 for identifying the items.

## Patentansprüche

1. Bilderkennungsverfahren (500) zum Identifizieren von Gegenständen in einer Buchbindemaschine, wobei das Verfahren folgende Schritte aufweist:
Erfassen (506) einer digitalen Darstellung von mindestens einem zu erfassenden Musterbild, wobei die Darstellung jedes Musterbildes aus einer Mehrzahl von Elementen gruppiert in Blöcken gebildet ist,
Berechnen (508) von mindestens einem entsprechenden Parameter für jeden Block von jedem Musterbild, wobei der mindestens eine Parameter auf einem dem Block entsprechenden Bereich der Darstellung des Musterbildes basiert,
Berechnen (512-520) von mindestens einem entsprechenden Schwellenwert für jeden Parameter von jedem Block jedes Musterbildes in Abhängigkeit von einem Vergleich zwischen dem Parameter des Blocks und den Parametern von benachbarten Blöcken,
Erfassen (530-554) der digitalen Darstellung eines zu verifizierenden aktuellen Bildes,
Berechnen (556) des mindestens einen entsprechenden Parameters für jeden Block des aktuellen Bildes, und
Verifizieren (558-566) einer Übereinstimmung des aktuellen Bildes mit einem erwarteten Musterbild von dem mindestens einem Musterbild in Abhängigkeit von einem Kriterium auf der Basis eines Vergleichs zwischen jedem Parameter jedes Blocks des aktuellen Bildes und dem entsprechenden Parameter des entsprechenden Blocks des erwarteten Musterbildes, wobei das Resultat des Vergleichs von dem entsprechenden mindestens einen Schwellenwert abhängig ist.

2. Verfahren (500) nach Anspruch 1,
wobei jedes Element mindestens eine Farbkomponente eines entsprechenden Pixels des Bildes angibt, wobei für jede Farbe der Schritt des Berechnens (508; 556) des mindestens einen entsprechenden Parameters für jeden Block beinhaltet:
Berechnen eines Durchschnitts der Farbkomponenten des entsprechenden Bereichs.

3. Verfahren (500) nach Anspruch 1 oder 2,
wobei für jeden Block der entsprechende Bereich der digitalen Darstellung aus den Elementen des Blocks und aus den Elementen besteht, die einen den Block umgebenden Rahmen bilden

4. Verfahren (500) nach einem der Ansprüche 1 bis 3,
wobei der Schritt des Bestimmens (512-520) von mindestens einem entsprechenden Schwellenwert für jeden Block beinhaltet, und zwar für jeden Parameter des Blocks:
Berechnen (512) einer Differenz zwischen dem Parameter des Blocks und dem entsprechenden Parameter jedes benachbarten Blocks,
Auswählen (514) von mindestens einem Spitzenwert der Differenzen.

5. Verfahren (500) nach Anspruch 4,
wobei die Darstellung des Musterbildes eine Mehrzahl von Grenzblöcken beinhaltet, die eine Mehrzahl von Nicht-Grenzblöcken umgeben, wobei der Schritt des Bestimmens (512-520) von mindestens einem entsprechenden Schwellenwert für jeden Block ferner beinhaltet:
Vorgeben (520) jedes Schwellenwerts für jeden Grenzblock mit dem schlechtesten von den entsprechenden Schwellenwerten für alle Nicht-Grenzblöcke.

6. Verfahren (500) nach einem der Ansprüche 1 bis 5,
wobei der Schritt des Verifizierens (558-566) einer Übereinstimmung beinhaltet:
Berechnen (558) einer weiteren Differenz zwischen jedem Parameter des aktuellen Bildes und dem entsprechenden Parameter des erwarteten Musterbildes,
Inkrementieren (560-562) eines Fehlerzählers, wenn mindestens eine weitere Differenz für jeden Block des aktuellen Bildes den entsprechenden mindestens einen Schwellenwert des erwarteten Musterbildes erreicht, und
Erfassen (566) der Übereinstimmung, wenn der Fehlerzähler unter einem akzeptablen Wert ist.

7. Verfahren (500) nach einem der Ansprüche 1 bis 6,
das ferner folgende Schritte als Reaktion auf eine positive Verifizierung der Übereinstimmung beinhaltet:
Speichern (568) von Abweichungsinformation, die die weiteren Differenzen anzeigt, und
Aktualisieren (570-572) der Schwellenwerte des erwarteten Musterbildes in Abhängigkeit von der Abweichungsinformation.

8. Verfahren (500) nach Anspruch 1 oder 7,
wobei der Schritt des Ermittelns (530-534) der digitalen Darstellung eines aktuellen Bildes beinhaltet:
Erzeugen (532-534) einer Mehrzahl von qualifizierten digitalen Darstellungen, die jeweils eine entsprechende Bewegung des aktuellen Bildes innerhalb eines zulässigen Bereichs anzeigen,
Bestimmen (536-540) eines Fehlerindexes für jede qualifizierte Darstellung, wobei der Fehlerindex auf noch einer weiteren Differenz zwischen einer Teilmenge der Parameter des qualifizierten Bildes und einer entsprechenden Teilmenge der Parameter des erwarteten Musterbildes basiert, Auswählen (546) eines geringsten von den Fehlerindizes, und
Ersetzen (554) der Darstellung des aktuellen Bildes durch die qualifizierte Darstellung, die dem ausgewählten Fehlerindex entspricht.

9. Verfahren (500) nach Anspruch 8,
wobei die mindestens eine Farbkomponente jedes Pixels aus einer roten Komponente, einer grünen Komponente und einer blauen Komponente besteht, wobei jede Teilmenge der Parameter aus den entsprechenden Parametern auf der Basis der grünen Komponenten besteht.

10. Verfahren (500) nach Anspruch 8 oder 9,
das ferner folgende Schritte beinhaltet:
Speichern (570) von Toleranzinformation, die die Bewegungen angibt, welche der dem ausgewählten Fehlerindex zugeordneten qualifizierten Darstellung entsprechen, und
Aktualisieren (572-574) des zulässigen Bereichs in Abhängigkeit von der Toleranzinformation.

11. Verfahren (500) nach einem der Ansprüche 1 bis 10,
wobei die Gegenstände aus Signaturen (105) mit einer minimalen zulässigen Größe bestehen, und wobei jede Signatur einen Abfallbereich (210) beinhaltet, der einen bedruckbaren Bereich (215) umgibt, und wobei der bedruckbare Bereich einen Randbereich (220) beinhaltet, der eine gedruckte Seite (225) umgibt, wobei jedes Bild (205) aus einer Schnittmenge der gedruckten Seite mit einem Reduzierungsbereich (230) besteht, der sich von einer Lesebeginnecke der Signatur weg erstreckt und die Mindestgröße aufweist.

12. Computerprogramm (410, 425), das sich direkt in einen Arbeitsspeicher (330) eines Datenverarbeitungssystems (150) laden läßt, wobei das Programm zum Durchführen des Verfahrens nach einem der Ansprüche 1 bis 11 ausgebildet ist, wenn das Programm auf dem System ausgeführt wird.

13. Programmprodukt (335), das ein computerlesbares Medium beinhaltet, das das Computerprogramm (410, 425) gemäß Anspruch 12 verkörpert.

14. Bilderkennungsvorrichtung (115) zum Identifizieren von Gegenständen in einer Buchbindemaschine mit einer Einrichtung (305, 410, 425), die dazu ausgebildet ist, die Bilderkennungsvorrichtung zum Ausführen der Schritte des Verfahrens nach einem der Ansprüche 1 bis 11 zu veranlassen.

15. Buchbindemaschine (100) mit einer Einrichtung (110) zum Bereitstellen von Gegenständen (105), die nacheinander zu identifizieren sind, und mit der Bilderkennungsvorrichtung (115) gemäß Anspruch 14 zum Identifizieren der Gegenstände.

## Revendications

1. Une méthode de reconnaissance d'images (500) pour identifier des objets dans une machine de reliure de livres, la méthode comprenant les étapes de:
acquérir (506) une représentation numérique d'au moins une image d'échantillon à apprendre, la représentation de chaque image d'échantillon étant composée d'une pluralité d'éléments groupés en blocs,
calculer (508) au moins un paramètre correspondant pour chaque bloc de chaque image d'échantillon, ledit au moins un paramètre étant basé sur une partie de la représentation de l'image d'échantillon correspondant au bloc,
calculer (512-520) au moins une valeur de seuil correspondant pour chaque paramètre de chaque bloc de chaque image d'échantillon selon une comparaison du paramètre du bloc parmi les paramètres des blocs adjacents,
acquérir (530-554) la représentation numérique d'une image courante à vérifier,
calculer (556) ledit au moins un paramètre correspondant pour chaque bloc de l'image courante, et
vérifier (558-566) un accord entre l'image courante et une attendue de ladite au moins une image d'échantillon selon un critère basé sur un résultat d'une comparaison entre chaque paramètre de chaque bloc de l'image courante et le paramètre correspondant du bloc correspondant de l'image d'échantillon attendue, le résultat de la comparaison dépendant de l'au moins une valeur de seuil correspondante.

2. La méthode (500) selon la revendication 1, dans laquelle chaque élément est indicatif d'au moins une composante de couleur d'un pixel correspondant de l'image, pour chaque couleur l'étape de calculer (508) ledit au moins un paramètre correspondant pour chaque bloc comprenant:
calculer une moyenne des composantes de couleur de la portion correspondante.

3. La méthode (500) selon la revendication 1 ou 2, dans laquelle pour chaque bloc la partie correspondante de la représentation numérique consiste dans les éléments du bloc et les éléments définissant un cadre entourant le bloc.

4. La méthode (500) selon l'une quelconque des revendications de 1 à 3, dans laquelle l'étape de déterminer (512-520) au moins une valeur de seuil correspondant pour chaque bloc comprenant, pour chaque paramètre du bloc :
calculer (512) une différence entre le paramètre du bloc et le paramètre correspondant de chaque bloc adjacent,
sélectionner (514) au moins une valeur de crête de la différence.

5. La méthode (500) selon la revendication 4, dans laquelle la représentation de l'image d'échantillon comprend une pluralité de blocs de frontière autour d'une pluralité de blocs pas de frontière, l'étape de déterminer (512-520) au moins une valeur de seuil correspondant pour chaque bloc comprenant en outre:
fixer (520) chaque valeur de seuil pour chaque bloc de frontière au pire parmi les valeurs de seuil correspondantes pour tous les blocs pas de frontière.

6. La méthode (500) selon l'une quelconque des revendications de 1 à 5, dans laquelle l'étape de vérifier (558-566) un accord comprend:
calculer (558) une autre différence entre chaque paramètre de l'image courante et le paramètre correspondant de l'image d'échantillon attendue,
incrémenter (560-562) un compteur d'erreur lorsque au moins une autre différence pour chaque bloc de l'image courante atteint l'au moins une valeur de seuil correspondante de l'image d'échantillon attendue, et
détecter (566) l'accord lorsque le compteur d'erreur est inférieur à une valeur acceptable.

7. La méthode (500) selon l'une quelconque des revendications de 1 à 6, comprenant en outre, en réponse à une vérification positive de l'accord, les étapes de:
mémoriser (568) des informations de dérive indicative des autres différences, et
mettre à jour (570-572) les valeurs de seuil de l'image d'échantillon attendue selon les informations de dérive.

8. La méthode (500) selon la revendication 1 ou 7, dans laquelle l'étape de acquérir (530-554) la représentation numérique d'une image courante comprend:
générer (532-534) une pluralité de représentations numériques éligibles chacune indicative d'un mouvement correspondant de l'image courante à l'intérieur d'un intervalle admissible,
déterminer (536-540) un indice d'erreur pour chaque représentation éligible, l'indice d'erreur étant basé sur encore une outre différence entre un sous-ensemble des paramètres de l'image éligible et un sous-ensemble correspondant des paramètres de l'image d'échantillon attendue,
sélectionner (546) un minimum des indices d'erreur, et
remplacer (554) la représentation de l'image courante avec la représentation éligible correspondant à l'indice d'erreur sélectionné.

9. La méthode (500) selon la revendication 8, dans laquelle ladite au moins une composante de couleur de chaque pixel est constituée d'une composante rouge, une composante verte et une composante bleue, chaque sous-ensemble des paramètres consistant dans les paramètres correspondants basés sur les composantes vertes.

10. La méthode (500) selon la revendication 8 ou 9, comprenant en outre les étapes de:
mémoriser (570) des informations de tolérance indicatives des mouvements correspondant à la représentation admissible associée à l'indice d'erreur sélectionnée, et
mettre à jour (572-574) l'intervalle admissible selon les informations de tolérance.

11. La méthode (500) selon l'une quelconque des revendications de 1 à 10, dans laquelle les éléments consistent en signatures (105) ayant une taille minimum admissible, et dans laquelle chaque signature comprend une zone de chute (210) entourant une zone d'impression (215) et la zone d'impression comprend une zone de marge (220) entourant une page imprimée (225), chaque image (205) consistant dans une intersection de la page imprimée avec une zone de réduction (230) s'étendant à partir d'un coin de début de lecture de la signature et ayant la taille minimum.

12. Un programme d'ordinateur (410,425) directement chargeable dans une mémoire de travail (330) d'un système de traitement de données (150), le programme d'ordinateur étant configuré pour exécuter la méthode selon l'une quelconque des revendications de 1 à 11 lorsque le programme est exécuté sur le système.

13. Un produit de programme (335) comprenant un support lisible par ordinateur incorporant le programme d'ordinateur (410-425) selon la revendication 12.

14. Un dispositif de reconnaissance d'image (115) pour identifier des objets dans une machine de reliure de livres, comprenant des moyens (305,410,425) configurés pour causer le dispositif de reconnaissance d'image à exécuter les étapes de la méthode selon l'une quelconque des revendications de 1 à 11.

15. Une machine de reliure (100) comprenant des moyens (110) pour fournir des objets (105) à identifier en succession, et le dispositif de reconnaissance d'image (115) selon la revendication 14 pour identifier les objets.
